# EUROPEAN PATENT APPLICATION

(11) **EP 2 806 652 A1**
(43) Date of publication of application: **26.11.2014**
(21) Application number: 13801365.1
(22) Date of filing: 31.05.2013
(51) Int. Cl.: H04N 21/8547

(54) **METHOD AND SYSTEM OF PLAYING REAL TIME ONLINE VIDEO AT VARIABLE SPEED**

(30) Priority: 08.06.2012 CN 201210188519
(71) Applicant: Tencent Technology (Shenzhen) Company Limited, Guangdong 518044 (CN)
(72) Inventor: LAI, Jing, Shenzhen City Guangdong 518044 (CN)
(74) Representative: Boult Wade Tennant
(86) International application number: PCT/CN2013/076544
(87) International publication number: WO 2013/182011

(57) **Abstract**

The present disclosure provides a method of playing online video at a speed variable in real time, the method comprising: step S1: receiving multimedia source file chosen by the user; step S2: reading out the multimedia source file; step S3: separating audio stream and video stream from the multimedia source file; step S4: decoding the audio stream and the video stream separately; step S5: varying the speed of the audio stream; step S6: assigning audio clock of the audio stream whose speed has been varied to video clock of the decoded video stream, and reading out the video clock after assignment; step S7: outputting the audio stream and the video stream. The present disclosure also provides a system of playing online video at a speed variable in real time. The method and system of playing online video at a speed variable in real time provided by the present disclosure achieve the goal of playing at variable speed and audio-video synchronization.

## Description

### FIELD OF THE DISCLOSURE

The disclosure relates to a network multimedia technology, and in particular, to a method and a system of playing online video at a speed variable in real time.

### BACKGROUND

As network and multimedia technology develops, the network multimedia technology is becoming an integral part of people's life, study and work. More and more users choose network to watch videos online, make video communication online and refresh courses online and the like.

In the process of video playback, more and more users expect to be able to adjust the speed of playing videos according to requirements. For example, for finding desired video clip, the users expect to be able to quickly play videos according to the requirements for video content, and the users expect to be able to play a video frame by frame at variable speed when learning spoken language via videos, in order to clearly understand the actions in detail; the users require to quickly play a video at variable to correct incorrect actions when learning dance movements of an actor in the video. Meanwhile, the users provide a requirement that the speed is variable without tone variation in order to hear voice clearly when playing the video at variable speed.

However, there is a few seconds of response delay in existing online video playback system when the user changes play speed, which appears as the frame or sound being stagnation, and it is difficult to synchronize audio and video for random dragging in the variable speed playback state, which needs to wait for a few seconds to about ten seconds.

### SUMMARY OF THE DISCLOSURE

One aspect of the present disclosure provides a new method and system of playing online video at a speed variable in real time in order to reach the purpose of playing at variable speed and synchronizing audio and video.

The following technical solution are used to achieve the present disclosure and solve its technical problems.

The present disclosure provides a method of playing online video at a speed variable in real time, the method comprises: step S1: receiving a user selected multimedia source file; step S2: reading out the multimedia source file; step S3: separating an audio stream and a video stream from the multimedia source file; step S4: decoding the separated audio stream and video stream, respectively; step S5: varying the speed of the audio stream; step S6: assigning an audio clock of the audio stream of which speed has been varied to a video clock of the decoded video stream, and reading out the assigned video clock; and step S7: outputting the audio stream and the video stream.

Preferably, the step S1 further comprises: setting a data amount threshold, if data amount of the received multimedia source files is greater than the data amount threshold, it is start to read the multimedia source file.

Preferably, in the step S5: the step of varying the speed of the audio stream comprises varying a speed of the audio stream without varying a tone of the audio.

Preferably, in the step S4: a graphics processing unit is used to decode the video stream.

The present disclosure provides a system of playing online video at a speed variable in real time, the system comprises: buffer, a reading unit, a separating unit, a decoding unit, an audio processing unit, a synchronizing unit and an outputting unit. The buffer module is configured to receive multimedia source files received by a user. The reading unit is configured to read the multimedia source files from the buffer module. The separating unit is configured to separate an audio stream and a video stream from the read multimedia source files. The decoding unit is configured to decode the separated audio stream and video stream, respectively. The audio processing unit is configured to change the speed of the audio stream. The synchronizing unit is configured to assign an audio clock of the audio stream of which speed has been varied to a video clock of the decoded video stream, and read the assigned video clock. The outputting unit is configured to output the audio stream and the video stream.

Preferably, the above system further comprises a parameter setting unit. The parameter setting unit connects with the buffer module and is configured to set a data amount threshold. If data amount of the multimedia source files received by the buffer module is greater than the data amount threshold, the reading unit starts to read the multimedia source files in the buffer module.

Preferably, the audio processing unit changes a speed of the audio stream without varying a tone of the audio.

Preferably, the decoding unit comprises an audio decoding unit configured to decode the audio stream and a video decoding unit configured to decode the video stream.

Preferably, the video decoding unit decodes the video stream by using a graphics processing unit.

Preferably, the synchronizing unit comprises a clock assignment module and a clock reading unit. The clock assignment module is configured to assign an audio clock of the audio stream of which speed has been varied to a video clock of the decoded video stream, and the clock reading unit is configured to read the assigned video clock.

In summary, in the system and method of playing online video at a speed variable in real time provided in the present disclosure, the audio stream and the video stream are synchronously adjusted by assigning an audio clock of the audio stream of which speed has been varied to a video clock of the decoded video stream, wherein the speed of the audio is varied and the audio stream and the video stream are synchronized after the audio and the video are decoded, and still synchronously plays the audio and the video after playing at variable and randomly dragging.

The foregoing description is merely a summary of the technical solution of the present disclosure. In order to clearly illustrate the technical solution of the present disclosure, implement the technical solution according to disclosures of the description, and enable the above and other features and advantages of the present disclosure be more clear, embodiments of the present disclosure will be described below with reference to the accompanying drawings, the detailed description is following.

### DESCRIPTION OF THE DRAWINGS

Fig. 1 is a schematic diagram showing a system of playing online video at a speed variable in real time according to an embodiment of the present disclosure;
Fig. 2 is a flow diagram showing a method of playing online video at a speed variable in real time according to an embodiment of the present disclosure.

### DETAILED DESCRIPTION

The method and system of playing online video at a speed variable in real time provided in the present disclosure will be described in more detail below with reference to the accompanying drawings and preferred embodiments to illustrate the specific implementation, structure, features and functions thereof.

The foregoing and other technical contents, features and functions thereof will be described below with reference to the detailed description of preferred embodiments as shown in Figures. By means of illustrating the specific embodiments, the technical solution of the present disclosure and functions thereof would be understood in more depth. However, the accompanying drawings are only provided to illustrate the present disclosure and thus are not limitative of the present disclosure.

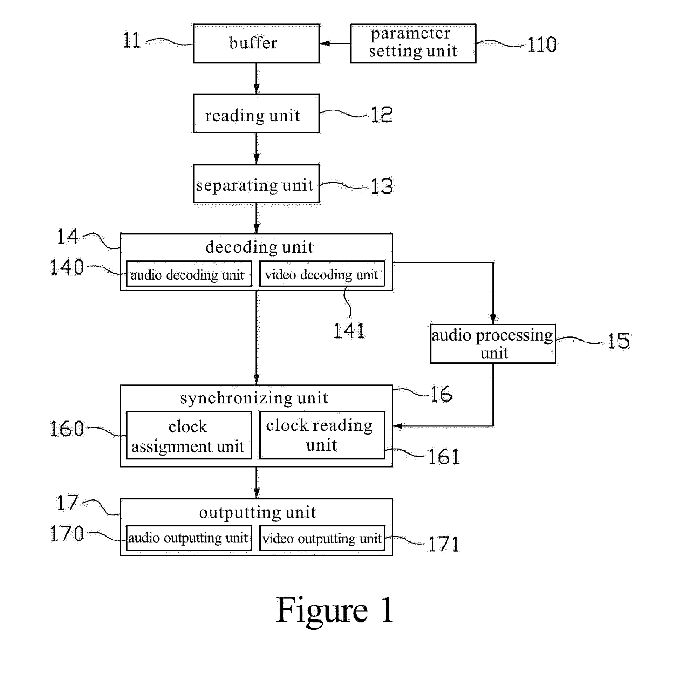

Fig. 1 is a schematic diagram showing a system of playing online video at a speed variable in real time according to an embodiment of the present disclosure. Referring to Figure 1, in the present embodiment, a system 10 of playing online video at a speed variable in real time comprises: buffer 11, a reading unit 12, a separating unit 13, a decoding unit 14, an audio processing unit 15, a synchronizing unit 16 and an outputting unit 17. The buffer module 11 is configured to receive and buffer multimedia source files selected by a user online. The reading unit 12 is configured to read the multimedia source files from the buffer module 11. The separating unit 13 is configured to separate an audio stream and a video stream from the multimedia source files read by the reading unit 12. The decoding unit 14 is configured to decode the separated audio stream or video stream. The audio processing unit 15 is configured to change a speed of the audio stream. The synchronizing unit 16 is configured to assign an audio clock of the audio stream of which speed has been varied to a video clock of the decoded video stream, and synchronously adjusts the audio stream and the video stream. The outputting unit 17 is configured to output the synchronously adjusted audio stream and the video stream. The audio clock refers to a clock corresponding to the audio stream (also referred as timestamp), which is used to represent a rate of the audio stream and control play of the audio stream; the video clock refers to a clock corresponding to the video stream, which is used to represent a rate of the video stream and control play of the video stream.

In the present embodiment, the system 10 of playing online video at a speed variable in real time further comprises a parameter setting unit 110. The parameter setting unit 110 is configured to set a data amount threshold, and transmits the data amount threshold to the buffer module 11. If data amount of the multimedia source files received by the buffer module 11 is greater than the data amount threshold, the reading unit 12 starts to read the multimedia source files in the buffer module. The data amount threshold can be set to 1 Mbit or 512 Kbit and the like.

In the present embodiment, the audio processing unit 15 preferably changes a speed of the audio stream without varying a tone of the audio; that is, it is a processing method that the rate of original audio becomes faster or slower according requirements without varying a pitch of the original tone. Currently, there are many algorithms that can change a speed of the audio stream without varying a tone of the audio. Since the present disclosure is not limited to it, it is not repeated here.

In the present embodiment, the decoding unit 14 further comprises an audio decoding unit 140 configured to decode the audio stream and a video decoding unit 141 configured to decode the video stream. In the present embodiment, the video decoding unit 141 preferably uses a graphics processing unit (GPU) to decode the video stream. The existing video decoding technology usually uses software to enable a central processing unit (CPU) to perform the video decoding. However, since the CPU has huge workloads, such as managing memory and inputting response and the like besides performing decoding operation, its performance will be discounted in the actual operation, it usually occurs that a video card waits for the CPU data, and its arithmetic speed cannot meet the requirements of the user. Furthermore, high-definition video is very common now, so it is more difficult to perform decoding with the CPU. The high-definition video here refers to a video of which resolution is higher than 1280×720. At present, the common high-definition video has two resolutions of 1920×1080 and 1280×720. It is not depended on the CPU to use the GPU to perform decoding, and the video decoding is separately completed with a dedicated device. Furthermore, the GPU is applicable to non-high-definition video and high-definition video decoding. When the GPU is used to decode the high-definition video, the CPU utilization is very low so that the user can operates multiple tasks while watching the video, and the power consumption of using the GPU to decode the high-definition video stream is much lower than that of using the CPU to decode the high-definition video stream; that is, if the GPU was used to decode the high-definition video, it would substantially improve decoding efficiency and reduce the CPU utilization.

In present embodiment, the synchronizing unit 16 comprises a clock assignment module 160 and a clock reading unit 161. The clock assignment module 160 assigns an audio clock of the audio stream to a video clock, and the clock reading unit 161 reads the assigned video clock.

In the present embodiment, the outputting unit 17 comprises an audio outputting unit 170 configured to output an audio stream and a video outputting unit 171 configured to output a video stream.

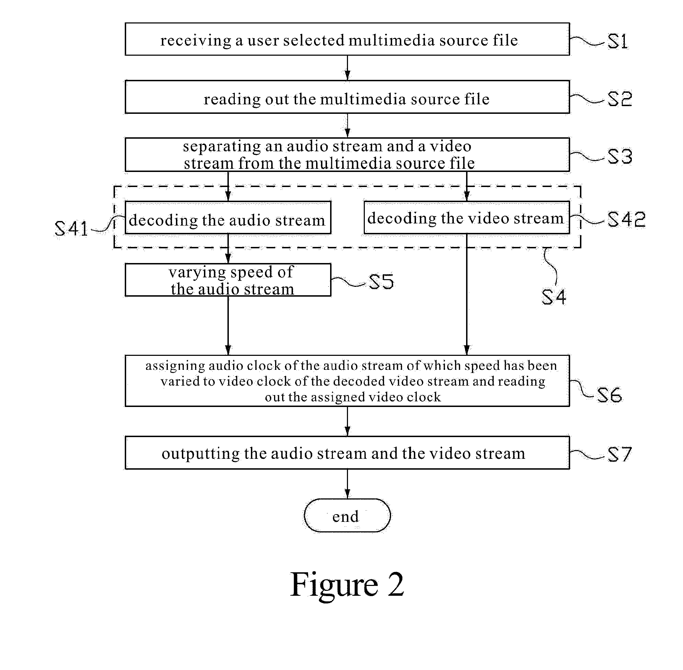

Fig. 2 is a flow diagram showing a method of playing online video at a speed variable in real time provided in the present disclosure. It will be described in detail below with reference to Figures 1 and 2 how the system playing online video at a speed variable in real time of the present disclosure operates. Referring to Figures 1 and 2, in the present embodiment, the method of playing online video at a speed variable in real time comprises:
step S1: receiving a user selected multimedia source file.
   In the step S1, first, reading out the multimedia source file (also referred as multimedia data) from a network, the multimedia source filed selected by a user online is received and stored by the buffer module. If a buffer is caused by a too slow internet speed, that is the buffer module 11 cannot continuously read the multimedia source file form the network, the procedure is stopped at this step until the buffer module 11 read sufficient multimedia source files. The amount of the multimedia source files can be set. For example, a data amount threshold (DT) is set by the parameter setting unit 110, if the amount of data of the received multimedia source files is greater than the data amount threshold DT, the reading unit 12 starts to read the multimedia source files from the buffer module 11. It can avoid that the variable speed playing is failure when the online video playing is buffering. Preferably, the data amount threshold is 1 Mbit or 512 Kbit and the like.
step S2: reading out the multimedia source file.
   In the step S2, the reading unit 12 reads the multimedia source files from the buffer module 11 and transmits the multimedia source files to the separating unit 13. The multimedia here comprises a video stream and an audio stream.
step S3: separating the audio stream and the video stream from the multimedia source files.
   In the step S3, the separating unit 13 connects with the reading unit 12 and is configured to separate the audio stream and the video stream form the multimedia source files read by the reading unit 12; that is, the multimedia source files are separated into the audio stream and the video stream in order to process the audio stream and the video stream, respectively.
step S4: decoding the separated audio stream and video stream.
   In the step S4, the audio decoding unit 140 and the video decoding unit 141 in the decoding unit 14 decode the separated audio stream and video stream, respectively; that is, the step S4 includes a step S41 of decoding the audio stream and a step S42 of decoding the video stream. Preferably, in the step S4, the decoding unit 14 uses the GPU to decode the video stream for improving decoding efficiency and reducing the CPU utilization.
step S5: varying the speed of the audio stream.
   In the Step S5, the speed of the audio stream decoded by the decoding unit 14 is varied by the audio processing unit 15. Preferably, the step S5 of varying the speed of the audio stream comprises varying the speed of the audio stream without varying the tone of the audio stream.
step S6: assigning an audio clock of the audio stream of which speed has been varied to a video clock of the decoded video stream and reading out the assigned video clock.
   After the speed of the audio stream is varied, its corresponding clock is varied; that is, the audio clock is varied. For example, if the play speed of an audio stream having a length of two seconds was increased by two times, its length would become one second. Assuming that the clock at which the play of audio stream starts is T, if the speed was not varied, the clock at which the audio stream playback is completed would be T+2, but if the speed was increased by two times, its corresponding clock would become T+1, so the video clock of the video stream corresponding to the audio stream should be correspondingly varied in order to play the video steam at variable speed and synchronize the audio stream and the video stream of which speed are varied. For example, for the audio having a length of two seconds, if the speed was not varied, the video frame that has a video clock T would be displayed at the beginning of playing the audio, after the audio stream is played, the video frame that has a video clock T+2 would be displayed; if the speed of the audio stream was increased by two times, the video frame that has a video clock T would be displayed at the beginning of playing the audio, after the audio stream is played, the video frame that has a video clock T+2 would be displayed at the clock T+1. Therefore, the above problems can be solved by assigning the audio clock of the audio stream of which speed has been varied to the video clock of the decoded video stream.
   In the step S6, the audio processing unit 15 transmits the audio stream of which speed has been varied to the synchronizing unit 16; the synchronizing unit 16 assigns the audio clock of the audio stream of which speed has been varied to the video clock of the decoded video stream and reads the assigned video clock to synchronously adjust the audio stream and the video stream. In particular, the clock assignment module 160 in the synchronizing unit 16 obtains the audio clock of the audio stream of which speed has been varied by calculation, then assigns the audio clock to the video clock of the decoded video stream, the clock reading unit 161 reads the assigned video clock and uses it to control the play of the video stream. Using the audio stream having a length of two seconds of which the speed is increased by two times as an example, after the audio stream of which the speed has been varied is played, the corresponding video frame that has a video clock T+2 would be displayed at the clock T+2; however, in the present embodiment, since the audio clock of the audio stream of which speed has been varied is assigned to the video clock of the decoded video stream, the corresponding video frame that has a video clock T+2 would be displayed at the clock T+1, thereby to play the video steam at variable speed and synchronize the audio stream and the video stream of which speed are varied.
step S7: outputting the audio stream and the video stream.
   Finally in the step S7, the audio outputting unit 170 and the video outputting unit 171 in the outputting unit 17 output the synchronously adjusted audio stream and the video stream, respectively, the user watches multimedia media of which the audio and the video has been synchronized.

The above operating procedures are repeated for each audio frame or video frame.

In summary, in the system and method of playing online video at a speed variable in real time provided in the present disclosure, the audio stream and the video stream are synchronously adjusted by assigning an audio clock of the audio stream of which speed has been varied to a video clock of the decoded video stream, wherein the speed of the audio is varied and the audio stream and the video stream are synchronized after the audio and the video are decoded, and still synchronously plays the audio and the video after playing at variable and randomly dragging.

Those skilled in the art would understand that all or a portion of procedures in the method according to embodiments can be implemented by a computer program instructing related hardware. The program can be stored in a computer readable storage medium. When the program is executed, it comprises the procedures of above methods according to embodiments. The storage medium can be a disk, CD, ROM and RAM and the like.

The above description is only embodiments of the present disclosure, which cannot be interpreted as any limitation to the present disclosure. Although the present disclosure is disclosed according to above embodiments, the embodiments cannot be interpreted as limitation to the present disclosure. Anyone skilled in the art can make equivalent embodiments with equivalent variations by making some alternations or modifications using the technical contents disclosed above, without departing from the scope of the present disclosure. Any simple modification, equivalent variations and modification made to above embodiments according to the technical contents falls into the scope of the technical solution of the present disclosure, without departing from the scope of the present disclosure.

## Claims

1. A method of playing online video at a speed variable in real time, comprising:
step S1: receiving a user selected multimedia source file;
step S2: reading out the multimedia source file;
step S3: separating an audio stream and a video stream from the multimedia source file;
step S4: decoding the separated audio stream and video stream, respectively;
step S5: varying speed of the audio stream;
step S6: assigning audio clock of the audio stream of which speed has been varied to video clock of the decoded video stream and reading out the assigned video clock; and
step S7: outputting the audio stream and the video stream.

2. The method of playing online video at a speed variable in real time according to claim 1, wherein the step S1 further comprises:
setting a data amount threshold;
starting to read out the multimedia source file if data amount of the received multimedia source file is greater than the data amount threshold.

3. The method of playing online video at a speed variable in real time according to claim 1, wherein the step S5 of varying speed of the audio stream comprises varying speed of the audio stream without varying tone of the audio.

4. The method of playing online video at a speed variable in real time according to claim 1, wherein, in the step S4, the video stream is decoded by using a graphics processing unit.

5. A system of playing online video at a speed variable in real time, comprising:
buffer configured to receive a user selected multimedia source file;
reading unit configured to read out the multimedia source file from the buffer;
separating unit configured to separate an audio stream and a video stream from the multimedia source file read out by the reading unit;
decoding unit configured to decode the separated audio stream and video stream;
audio processing unit configured to vary speed of the audio stream;
synchronizing unit configured to assign audio clock of the audio stream of which speed has been varied to video clock of the decoded video stream and to read the assigned video clock; and
outputting unit configured to output the audio stream and the video stream.

6. The system of playing online video at a speed variable in real time according to claim 5, further comprising parameter setting unit configured to set a data amount threshold and transmit the data amount threshold to the buffer ; and
wherein the reading unit starts to read out the multimedia source file from the buffer
if data amount of the multimedia source file received by the buffer is greater than the data amount threshold.

7. The system of playing online video at a speed variable in real time according to claim 5, wherein the audio processing unit varies speed of the audio stream without varying tone of the audio.

8. The system of playing online video at a speed variable in real time according to claim 5, wherein the decoding unit comprises an audio decoding unit configured to decode the audio stream and a video decoding unit configured to decode the video stream.

9. The system of playing online video at a speed variable in real time according to claim 8, wherein the video decoding unit decodes the video stream by using a graphics processing unit.

10. The system of playing online video at a speed variable in real time according to claim 5, wherein the synchronizing unit comprises a clock assignment unit configured to assign audio clock of the audio stream of which speed has been varied to video clock of the decoded video stream and a clock reading unit configured to read the assigned video clock.

11. One or more storage medium storing thereon a computer executable instruction for performing a method of playing online video at a speed variable in real time, wherein the method comprises:
step S1: receiving a user selected multimedia source file;
step S2: reading out the multimedia source file;
step S3: separating an audio stream and a video stream from the multimedia source file;
step S4: decoding the separated audio stream and video stream, respectively;
step S5: varying speed of the audio stream;
step S6: assigning audio clock of the audio stream of which speed has been varied to video clock of the decoded video stream, and reading out the assigned video clock; and
step S7: outputting the audio stream and the video stream.
